# EUROPÄISCHE PATENTANMELDUNG

(11) **EP 2 894 089 A1**
(43) Veröffentlichungstag der Anmeldung: **15.07.2015**
(21) Anmeldenummer: 15150965.0
(22) Anmeldetag: 13.01.2015
(51) Int. Cl.: B62M 6/55

(54) **Set mit Elektromotor für Fahrräder**

(30) Priorität: 13.01.2014 AT 500182014; 21.05.2014 AT 500782014
(71) Anmelder: Kraut, Daniel, 8642 St. Lorenzen (AT)
(72) Erfinder: Kraut, Daniel, 8642 St. Lorenzen (AT)
(74) Vertreter: Dilg, Haeusler, Schindelmann Patentanwaltsgesellschaft mbH

(57) **Zusammenfassung**

Die Erfindung betrifft ein Set (1) zur Befestigung an einem Fahrrad. Um ein einfaches Nach- und Umrüsten handelsüblicher Fahrräder mit einem Motor zu ermöglichen, umfasst das Set (1)
a) einen am Fahrrad befestigbaren Träger (2),
b) einen am Träger (2) lösbar anbringbaren Block (3) mit einem Motor (4),
c) zumindest ein Koppelungsmittel (5), mit dem bei Anbringung des Blockes (3) der Motor (4) mit einem Antrieb des Fahrrads verbindbar ist, um das Fahrrad elektrisch anzutreiben.

## Beschreibung

Die Erfindung betrifft ein Set zur Befestigung an einem Fahrrad.

In den letzten Jahren haben Elektrofahrräder mit einem Elektromotor zur Unterstützung des Antriebs bzw. Fahrens einen großen Aufschwung erlebt und erfreuen sich zunehmender Popularität. Für Interessierte bietet der Markt eine Vielzahl von verschiedenen Modellen, die von diversen Herstellern produziert werden. Die Elektrofahrräder sind mit einem dauerhaft verbauten Motor ausgestattet, der nicht ohne Weiteres entfernt werden kann, ohne die Funktionstüchtigkeit des Fahrrads zu gefährden. Daraus resultiert, dass der relativ schwere Motor auch dann Teil des Fahrrads und somit mit diesem zu bewegen ist, wenn der Motor an sich gar nicht benötigt wird oder für bestimmte Fahrradtouren unerwünscht ist.

Aufgabe der Erfindung ist es, ein Set anzugeben, mit dem übliche Fahrräder ohne elektrischen Antrieb zu einem-Fahrrad mit motorischem Antrieb nachgerüstet werden können, wobei der Motor nach der Nachrüstung bei Bedarf auch rasch entfernbar ist, sodass eine Umrüstung auf ein motorfreies Fahrrad möglich ist.

Diese Aufgabe wird gelöst durch ein Set zur Befestigung an einem Fahrrad, umfassend
a) einen am Fahrrad befestigbaren Träger,
b) einen am Träger lösbar anbringbaren Block mit einem Motor,
c) zumindest ein Koppelungsmittel, mit dem bei Anbringung des Blockes der Motor mit einem Antrieb des Fahrrads verbindbar ist, um das Fahrrad elektrisch anzutreiben.

Mit einem erfindungsgemäßen Set können auf einfache Weise handelsübliche Fahrräder nachgerüstet und zu einem Fahrrad mit unterstützendem motorischem Antrieb umgebaut werden. Hierfür ist ein Träger vorgesehen, der an einem Fahrrad dauerhaft fixiert wird. Der Träger ist so ausgebildet, dass an diesem ein den Motor umfassender Block lösbar anbringbar ist. Dadurch ist es möglich, den Block mit dem Motor beispielsweise aufzustecken oder aufzuschieben und damit das Fahrrad rasch zu einem Fahrrad mit motorischer Antriebshilfe zu modifizieren. Um den Antrieb sicherzustellen, weist das Set darüber hinaus zumindest ein Koppelungsmittel auf, damit bei Anbringung des Blockes eine Interaktion zwischen dem Motor und dem Antrieb des Fahrrads möglich ist. In der Regel handelt es sich hierbei um eine Kette, die mit einem Zahnrad des motorischen Antriebs und einem Kettenblatt des Fahrrads interagiert. Durch diese einfache Ausbildung kann eine Nachrüstung eines handelsüblichen Fahrrads in kurzer Zeit erfolgen. Ist der Träger einmal befestigt, ist es weiter auch möglich, innerhalb weniger Minuten den Motor vom Träger zu lösen oder an diesem anzubringen und somit wechselweise ein Fahrrad ohne oder mit motorischer Antriebshilfe zur Verfügung zu haben.

Bevorzugt ist es, dass der Träger zumindest eine Aufnahme aufweist und der Block zur formschlüssigen Anbringung mit einem zur Aufnahme korrespondierenden Bereich ausgebildet ist. Eine korrespondierende Ausbildung von Träger und Block zur Herstellung eines Formschlusses bei Anbringung des Blockes erlaubt das gewünscht schnelle Umrüsten in kurzer Zeit.

Für eine formschlüssige Befestigung kann insbesondere vorgesehen sein, dass der Block in eine Aufnahme des Trägers einschiebbar ist. Je nach Anordnung des Trägers an einem Fahrrad kann in diesem Fall auch ein Sicherungselement vorgesehen sein, mit welchem der Block in der eingeschobenen Position am Träger fixierbar ist, beispielsweise ein Sicherungsstift, der den Block am Träger arretiert.

Vorgesehen sein kann auch, dass der Träger an einer Unterseite eine Aufnahme für den Block aufweist und der Block an einer Oberseite zur formschlüssigen Anbringung korrespondierend ausgebildet ist. Dies erlaubt es, den Träger an einem Rahmen des Fahrrads zu befestigen und den Block samt Motor an der Unterseite des Trägers beispielsweise durch Einschieben zu befestigen, sodass der Block samt Motor unterhalb des Rahmens und somit an einer günstigen Position beim Betrieb des Fahrrads liegt.

Mit Vorteil ist vorgesehen, dass der Träger an der Unterseite zumindest eine Nut, bevorzugt mehrere Nuten, aufweist, in welche korrespondierende Vorsprünge an der Oberseite des Blockes eingreifen. Hierbei kann insbesondere vorgesehen sein, dass der Träger länglich ausgebildet ist und die zumindest eine Nut entlang einer Längsachse des Trägers verläuft. Die Vorsprünge sind hierbei im Querschnitt vorzugsweise schwalbenschwanzförmig ausgebildet. Mit einer Ausbildung einer Nut oder mehrerer Nuten am Träger und einer korrespondierenden Ausbildung mit Vorsprüngen an der Oberseite des Blockes wird eine passgenaue und formschlüssige Anbringung des Blockes durch bloßes Einschieben erreicht. Der Block mit dem Motor lässt sich dann innerhalb weniger Sekunden am Träger in exakter Positionierung anbringen. Ferner ist auch aufgrund der Verbindung über längliche Nuten und Vorsprünge eine stabile Fixierung des Blockes gegeben, was beim Betrieb des Fahrrads wichtig ist, da der Block mit dem Motor nicht wackelt, sondern stets in Position bleibt. Insbesondere wenn der Träger an einem Fahrrad schräg angeordnet ist, sodass der Block mit dem Motor nach unten einschiebbar ist, kann auch auf jegliches Sicherungsmittel zur Arretierung des Blockes verzichtet werden. Das Gewicht des Blockes, insbesondere dessen Motors, ist aufgrund der wirkenden Schwerkraft dann ausreichend, um den Block sicher in Position zu halten. Ist der Block mit dem Motor zu entfernen, braucht bloß eine elektrische Verbindung zu einem am Fahrrad angeordneten Akkumulator getrennt zu werden, was in der Regel das Lösen einer Steckverbindung bedeutet, und anschließend kann der Block vom Träger abgezogen werden. Somit ist eine Umrüstung innerhalb von wenigen Sekunden möglich.

Es kann vorgesehen sein, dass der Träger ein Basiselement zur Anbringung des Blockes und mit dem Basiselement verbundene und von diesem aufragende Seitenelemente mit Öffnungen zur Befestigung des Trägers an einem Tretlager eines Fahrrads sowie optional ein sich vom Basiselement und/oder den Seitenelementen nach oben erstreckendes Befestigungselement zur Fixierung des Trägers an einem Fahrradrahmen aufweist. Durch die aufragenden Seitenelemente mit den Öffnungen lässt sich der Träger am Tretlager fixieren. Das in der Regel länglich ausgebildete Basiselement für die Aufnahme des Blockes wird mit dem Rahmen verbunden. Hierfür kann beispielsweise ein sich vom Basiselement und/oder den Seitenelementen nach oben erstreckendes Befestigungsmittel wie eine Schelle vorgesehen sein.

Entsprechend den vorstehend dargelegten Vorteilen ist ein Fahrrad mit einer Wahlmöglichkeit für einen Antrieb mit einem erfindungsgemäßen Set ausgestattet. Hierbei ist es besonders günstig, wenn der Block durch Schwerkraft am oder im Träger gehalten und entgegen der Schwerkraft aus oder von diesem lösbar ist. Es ist dann auf einfache Weise möglich, das Fahrrad je nach Bedarf von motorunterstütztem auf nicht motorunterstützen Betrieb umzustellen.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine Explosionsdarstellung eines erfindungsgemäßen Sets;
Fig. 2 einen Teil eines Trägers;
Fig. 3 eine Seitenansicht eines erfindungsgemäßen Sets;
Fig. 4 eine rückseitige Ansicht eines erfindungsgemäßen Sets.

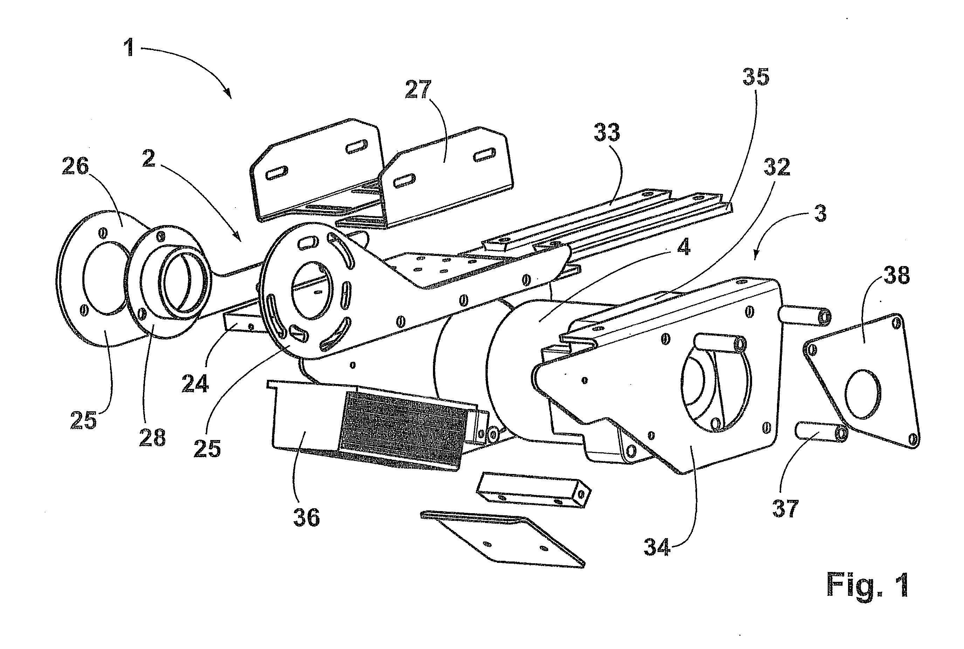

In Fig. 1 ist eine Explosionsdarstellung eines erfindungsgemäßen Sets 1 gezeigt. Das Set 1 umfasst einen Träger 2 sowie einen Block 3, der einen Motor 4, üblicherweise einen Elektromotor, umfasst. Der Träger 2 und der Block 3 samt Motor 4 sind gesonderte Einheiten, die bei Bedarf miteinander lösbar gekoppelt werden.

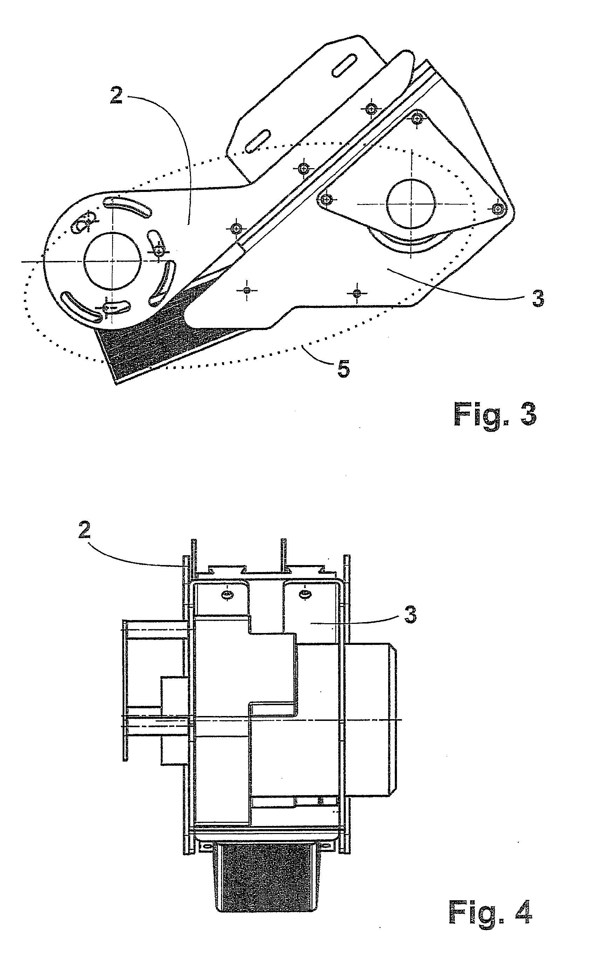

Der Träger 2 ist mit einem länglichen Basiselement 24 sowie Seitenelementen 25 ausgebildet, die sich vom Basiselement 24 nach oben hin erstrecken. An einem Ende der Seitenelemente 25 weisen diese Öffnungen 26 auf. Die Öffnungen 26 sind so ausgebildet, dass die beiden Seitenelemente 25 zusammen mit einer Hülse 28 an einem Tretlager eines Fahrrads befestigt werden können. Hierfür ist eines der Seitenelemente 25 zunächst mit dem Basiselement 24 noch nicht fix verbunden, während das andere Seitenelement 25 mit dem Basiselement 24 bereits vor Befestigung am Tretlager verbunden sein kann, beispielsweise durch eine Schraubverbindung, aber auch eine stoffschlüssige Verbindung. Da eine Befestigung des Trägers 2 an einem Tretiager alleine noch nicht für eine drehfesten Fixierung des Trägers 2 ausreicht, ist darüber hinaus ein Befestigungselement 27 vorgesehen, das sich vom Träger 2 nach oben erstreckt und im Ausführungsbeispiel als Rahmenblech mit Ösen ausgebildet ist, durch weiche ein Klettverschluss führbar ist. In anderen Ausführungsvarianten ist anstelle des Rahmenblechs mit Klettverschluss eine Schelle vorgesehen. Ist der Träger 2 an einem Fahrrad zu befestigen, werden zunächst die Seitenelemente 25 an einem Tretlager fixiert und anschließend das freie Seitenelement 25 mit dem Basiselement 24 verbunden. Anschließend erfolgt über das Befestigungselement 27 eine Fixierung des Trägers 2 auch an einem Fahrradrahmen. Üblicherweise befindet sich der Träger 2 dann in einer Position, wie diese bezogen auf eine Standebene des Fahrrads in Fig. 3 ersichtlich ist. Der Träger 2 ist somit schräg nach unten an einer Unterseite des Fahrradrahmens sowie am Tretlager fixiert.

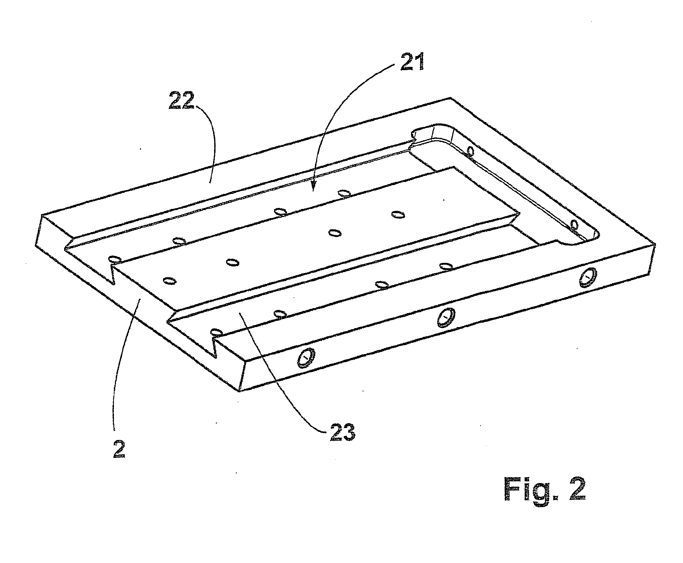

Der Träger 2 weist des Weiteren gemäß Fig. 2 an einer Unterseite 22 eine Aufnahme 21 auf, welche den Block 3 samt Motor 4 aufnimmt, wie dies in Fig. 3 und 4 ersichtlich ist. Der Block 3 ist in einfacher Weise aus Seitenblechen 34 sowie einem an der Oberseite 32 vorliegenden Schlitten 35 gebildet und nimmt den Motor 4 samt notwendiger Zusatzausstattung wie einen Controller 36 auf. An einem der Seitenbleche 34 sind Distanzstücke 37 sowie eine Ritzelabdeckung 38 vorgesehen. Im befestigten Zustand ist zwischen dem Seitenblech 34 und der Ritzelabdeckung 38 ein in Fig. 2 angedeutetes Koppelungsmittel 5 wie eine Kette angeordnet, mit welcher im Einsatz über den Motor 4 ein Kettenblatt des Fahrrads antreibbar ist.

An der Oberseite 32 des Blockes 3 ist ein Bereich 31 vorgesehen, der korrespondierend zu einer Unterseite 22 des Trägers 2 ausgebildet ist. Im Ausführungsbeispiel liegen an der Unterseite 22 des Trägers 2 zwei längliche Nuten 23 vor, in welche korrespondierende Vorsprünge 33 des Schlittens 35 des Blockes 3 formschlüssig eingreifen. Damit ist es auf einfache Weise möglich, wie in Fig. 3 ersichtlich, den Block 3 samt Motor 4 in den an einem Fahrrad befestigten Träger 2 einzuschieben und nach Verbindung des angedeuteten Koppelungsmittels 5 mit einem Kettenblatt das Fahrrad durch einen Elektromotor unterstützt zu betreiben. Wird der Motor 4 nicht benötigt, wird einfach der Block 3 vom Träger 2 gezogen. Das Fahrrad ist dann abgesehen von der Befestigung des Trägers 2 und einem zusätzlichen Kettenbiatt im Originalzustand.

Wenngleich der Block 3 wie im Ausführungsbeispiel vorteilhafterweise so ausgebildet ist, dass der Motor 4 umhüllt und damit geschützt ist, sind auch einfachere Ausbildungen des Blockes 3 möglich. In einer besonders leichtgewichtigen Variante kann der Block 3 bloß aus einer Platte mit Vorsprüngen 33 bestehen, an deren Unterseite der Motor 4 befestigt ist.

Ein erfindungsgemäßes Set 1 erlaubt es auf einfache und rasche Weise, handelsübliche Fahrräder mit einem Elektromotor auszustatten, und zwar zusätzlich mit dem Vorteil, dass der relativ schwere Motor 4 mit wenigen Handgriffen entfernt werden kann, wenn das Fahrrad ohne Unterstützung mit einem Elektromotor betrieben bzw. gefahren werden soll.

## Patentansprüche

1. Set (1) zur Befestigung an einem Fahrrad, umfassend
a) einen am Fahrrad befestigbaren Träger (2),
b) einen am Träger (2) lösbar anbringbaren Block (3) mit einem Motor (4),
c) zumindest ein Koppelungsmittel (5), mit dem bei Anbringung des Blockes (3) der Motor (4) mit einem Antrieb des Fahrrads verbindbar ist, um das Fahrrad elektrisch anzutreiben.

2. Set (1) nach Anspruch 1, wobei der Träger (2) zumindest eine Aufnahme (21) aufweist und der Block (3) zur formschlüssigen Anbringung mit einem zur Aufnahme (21) korrespondierenden Bereich (31) ausgebildet ist.

3. Set (1) nach Anspruch 1 oder 2, wobei der Block (3) zur formschlüssigen Befestigung in eine Aufnahme (21) des Trägers (2) einschiebbar ist.

4. Set (1) nach einem der Ansprüche 1 bis 3, wobei der Träger (2) an einer Unterseite (22) eine Aufnahme für den Block (3) aufweist und der Block (3) an einer Oberseite (32) zur formschlüssigen Anbringung korrespondierend ausgebildet ist.

5. Set (1) nach einem der Ansprüche 1 bis 4, wobei der Träger (2) an der Unterseite (22) zumindest eine Nut (23), bevorzugt mehrere Nuten (23), aufweist, in welche korrespondierende Vorsprünge (33) an der Oberseite des Blockes (3) eingreifen.

6. Set (1) nach Anspruch 5, wobei der Träger (2) länglich ausgebildet ist und die zumindest eine Nut (23) entlang einer Längsachse des Trägers (2) verläuft.

7. Set (1) nach Anspruch 5 oder 6, wobei die Vorsprünge (33) im Querschnitt schwalbenschwanzförmig ausgebildet sind.

8. Set (1) nach einem der Ansprüche 1 bis 7, wobei der Träger (2) ein Basiselement (24) zur Anbringung des Blockes (3) und mit dem Basiselement (24) verbundene und von diesem aufragende Seitenelemente (25) mit Öffnungen (26) zur Befestigung des Trägers (2) an einem Tretlager eines Fahrrads sowie optional ein sich vom Basiselement (24) und/oder den Seitenelementen (25) nach oben erstreckendes Befestigungselement (27) zur Fixierung des Trägers (2) an einem Fahrradrahmen aufweist.

9. Fahrrad mit einem Set (1) nach einem der Ansprüche 1 bis 8.

10. Fahrrad nach Anspruch 9, wobei der Block (3) durch Schwerkraft am oder im Träger (2) gehalten ist und entgegen der Schwerkraft aus oder von diesem lösbar ist.
